# EUROPÄISCHE PATENTANMELDUNG

(11) **EP 1 800 833 A1**
(43) Veröffentlichungstag der Anmeldung: **27.06.2007**
(21) Anmeldenummer: 06090217.8
(22) Anmeldetag: 06.12.2006
(51) Int. Cl.: B29C 47/90

(54) **Kalibrierhülse für extrudierte Kunststoffrohre**

(30) Priorität: 22.12.2005 DE 102005062138
(71) Anmelder: INOEX GmbH, 32547 Bad Oeynhausen (DE)
(72) Erfinder: Schmuhl, Jörg, Dr., 15711 Königs Wusterhausen (DE); Diekaus, Brigitte, 33659 Bielefeld (DE); Michels, Rolf, 32547 Bad Oeyenhausen (DE); Möller, Jörg, 32257 Bünde (DE)
(74) Vertreter: Seewald, Jürgen

(57) **Zusammenfassung**

Die vorliegende Erfindung betrifft eine Kalibrierhülse für extrudierte Kunststoffrohre, mit einer ersten Lage schräg zur Längsachse der Kalibriervorrichtung verlaufender, flexibler Bänder und einer zweiten Lage flexibler Bänder, wobei sich die Bänder der ersten Lage mit den Bändern der zweiten Lage nach Art eines ausziehbaren Scherengitters kreuzen und an den Kreuzungspunkten gelenkig miteinander verbunden sind, und wobei die Bänder der ersten oder zweiten Lage gelenkig an einen starren Haltering am Ende des Kalibrierhülse befestigt sind, der axial verstellbar ist, und wobei die Bänder der anderen Lage in einem axialen Abstand vom Haltering enden. Aufgabe der Erfindung ist es, eine derartige Kalibrierhülse zur Verfügung zu stellen, deren Innendurchmesser unter Berücksichtigung des Schrumpfungsverhaltens des extrudierten Rohres auf einfache Weise präzise einstellbar ist. Gelöst wird diese Aufgabe dadurch, dass die Bänder der ersten und zweiten Lage (33, 34) am Einlauf der Kalibrierhülse (10) ortsfest und gelenkig fixiert sind.

## Beschreibung

Die vorliegende Erfindung betrifft eine Kalibrierhülse für extrudierte Kunststoffrohre gemäß dem Oberbegriff des Anspruchs 1.

Aus dem Stand der Technik sind Kalibrierhülsen bekannt, deren Innendurchmesser im laufenden Betrieb in engen Grenzen veränderbar ist. Diese Änderung des Innendurchmessers der Kalibrierhülse dient dazu, Kunststoffrohre unter Berücksichtigung einer von verschiedenen Faktoren und von der Kunststoffart abhängenden Schrumpfung innerhalb der geforderten Toleranzgrenzen herzustellen. Beispiele für derartige Kalibrierhülsen sind in DE 203 17 941 U1, DE 203 05 616 U1, DE 200 23 052 U1, DE 200 23 052 U1, DE 200 00 872 U1 und EP 1 157 805 A1 zu finden. Nachteilig an diesen bekannten Kalibrierhülsen ist, dass die damit produzierten Kunststoffrohre Abweichungen von einem runden Querschnitt aufweisen.

In der US 2,981,975 ist eine Kalibrierhülse offenbart, die einen ersten und einen zweiten Satz schräg zur Längsachse der Kalibrierhülse verlaufender flexibler Bänder aufweist, wobei die Bänder beider Lagen nach Art eines Korbgeflechtes angeordnet sind, d.h., die Bänder beider Lagen werden abwechselnd von der Innenseite auf die Außenseite der Kalibrierhülse geführt, wodurch sie sich kreuzen. Die Bänder beider Lagen sind an diesen Kreuzungspunkten nicht miteinander verbunden und nur an ihren Enden gelenkig an einem Einlaufring bzw. Auslaufring fixiert. Während der Auslaufring ortsfest ist, ist der Einlaufring nach Art eines Kolbens axial verschiebbar. Er ist durch eine Kraftquelle z. B. einer Druckluftquelle beaufschlagbar, so dass er eine schnelle, hin- und hergehende Bewegung in axialer Richtung ausüben kann. Aufgrund dieser pulsierenden Bewegung des Einlaufringes vollführen die Bänder beider Sätze in engen Grenzen eine pulsierende Bewegung in radialer Richtung, wodurch sie mit der Frequenz dieser Bewegung in Kontakt mit der Außenfläche des Extrudats kommen bzw. keinen Kontakt mit dieser haben. In einer anderen Ausführungsform wird der gleiche Effekt durch ein Hin- und Herverdrehen des Einlaufringes erzeugt.

In der DE 103 18 137 B3 ist eine Kalibrierhülse offenbart, die für einen Dimensionswechsel bei laufender Produktion konzipiert ist, d.h., sie hat einen großen Verstellbereich, der es ermöglicht, ohne Stillsetzung der Produktion von einem Rohrdurchmesser auf einen anderen Rohrdurchmesser zu wechseln. Dabei garantieren die sich kreuzenden, miteinander gekoppelten Bänder beider Sätze einen absolut kreisrunden Querschnitt der produzierten Rohre bei jedem eingestellten Durchmesser. Obwohl diese Kalibrierhülse nicht dafür konzipiert ist, ist es natürlich auch möglich, durch entsprechendes, geringfügiges Verstellen der Kalibrierhülse der Schrumpfung des Kunststoffes Rechnung zu tragen.

Eine gattungsgemäße Kalibrierhülse ist aus der DE 10 2004 029 498 B3 bekannt. Sie ist ebenfalls für einen Dimensionswechsel bei laufender Produktion konzipiert und dadurch gekennzeichnet, dass ihr Einlaufkopf durch radial verstellbare Segmente gebildet ist, dadurch können Stauchungen des extrudierten Kunststoffrohres im Einlaufbereich vermieden werden.

Aufgabe der vorliegenden Erfindung ist es, eine weitere gattungsgemäße Kalibrierhülse zur Verfügung zu stellen, deren Innendurchmesser unter Berücksichtigung des Schrumpfungsverhaltens des extrudierten Rohres auf einfache Weise präzise einstellbar ist.

Gelöst wird diese Aufgabe mit einer Kalibrierhülse, die die Merkmale des Anspruchs 1 aufweist.

Es hat sich gezeigt, dass sich eine derartig aufgebaute Kalibrierhülse durch axiale Verstellung des am Ausgang der Kalibrierhülse angeordneten Halteringes derart stauchen bzw. auseinanderziehen lässt, dass sich - am Einlauf beginnend - ein konvergierender bzw. divergierender Durchmesserverlauf der Kalibrierhülse ergibt. Die durch entsprechendes axiales Verschieben des Halteringes erreichbaren Durchmesseränderungen der Kalibrierhülse sind völlig ausreichend, um die erzeugten Kunststoffrohre unter Berücksichtigung der Schrumpfung des Kunststoffes innerhalb der geforderten Toleranzgrenzen herstellen zu können. Aufgrund der Eigensteifigkeit der beiden nach Art eines Scherengitters zusammengefügten Bänderlagen können darüber hinaus Kunststoffrohre mit exakt rundem Querschnitt hergestellt werden.

Die Erfindung wird nachstehend anhand eines Ausführungsbeispiels näher erläutert. In der dazugehörigen Zeichnung zeigt:
- Fig. 1: eine Extrusionsanlage zur Herstellung von Kunststoffrohren mit ihren Hauptkomponenten in schematischer Darstellung,
- Fig. 2: einen vergrößerten Ausschnitt A gemäß Fig. 1 in teilweise geschnittener Darstellung bei in neutraler Einstellung befindlicher Kalibrierhülse,
- Fig. 3: eine Darstellung gemäß Fig. 2 bei maximal gestauchter Kalibrierhülse, und
- Fig. 4: eine Darstellung gemäß Fig. 2 bei maximal auseinandergezogener Kalibrierhülse.

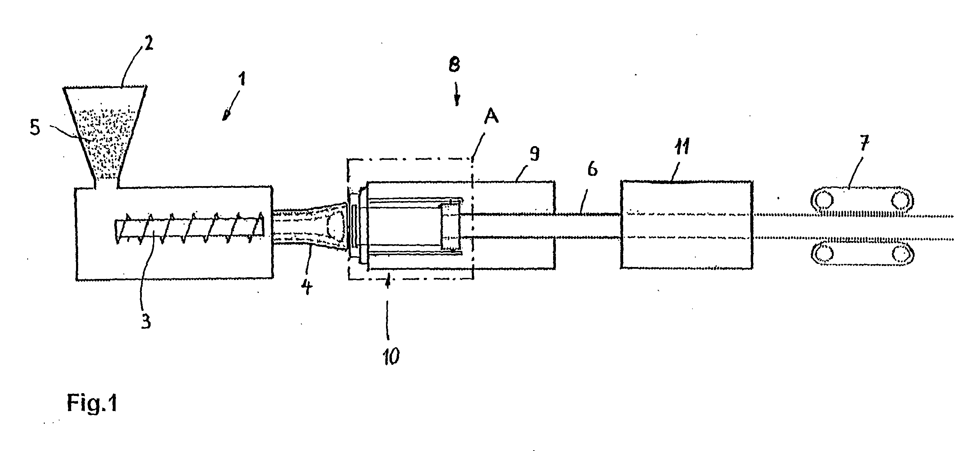

Die in Fig. 1 dargestellte Extrusionsanlage umfasst eine Extrudereinheit 1 mit einem Aufgabetrichter 2, einer Extruderschnecke 3 und einem Extrusionswerkzeug 4. Über den Aufgabetrichter 2 wird ein thermoplastischer Kunststoff 5 in Granulat- oder Pulverform der Extrudereinheit 1 zugeführt. In der Extrudereinheit 1 wird das Granulat bzw. das Pulver erwärmt, geknetet und plastifiziert. Anschließend wird der Kunststoff als formbare Masse durch die Extruderschnecke 3 in das Extrusionswerkzeug 4 gefördert und dort durch einen ringförmigen Durchtrittsspalt gedrückt.

Nach dem Austritt aus dem Extrusionswerkzeug 4 wird das heiße, noch verformbare Rohr 6 mittels einer am Ende der Extrusionslinie angeordneten Abzugseinheit 7 durch eine Kalibrier- und Kühleinheit 8 gezogen, die einem Vakuumtank 9 mit einer an dessen Eingang angeordneten Kalibrierhülse 10 aufweist. Nach dem Verlassen der Kalibrier- und Kühleinheit 8 tritt das Rohr 6 in eine Kühlstrecke 11 ein, in der es auf Raumtemperatur abgekühlt wird.

Das das Extrusionswerkzeug 4 verlassende Rohr 6 unterliegt aufgrund der einsetzenden Abkühlung einem Schrumpfungsprozess, der von verschiedenen Faktoren abhängig ist, so z. B. von der Art des extrudierten Kunststoffes, der Extrusionsgeschwindigkeit, der Wanddicke des Kunststoffrohres, der Temperatur des Kühlwassers und dem Vakuum in der Kalibrier- und Kühleinheit 8. Bei Einsatz einer starren Kalibrierhülse 10 müssten daher große Toleranzschwankungen der extrudierten Kunststoffrohre in Kauf genommen werden oder aber es müssten Kalibrierhülsen mit unterschiedlichen Durchmessern vorgehalten werden, die dann entsprechend dem Schrumpfungsverhalten der Kunststoffrohre auszutauschen wären. Um diese Nachteile zu umgehen, sind die Kalibrierhülsen nach dem Stand der Technik in ihrem Durchmesser veränderbar. So auch die in der Extrusionsanlage gemäß Fig. 1 eingesetzte Kalibrierhülse 10, deren Aufbau nachstehend näher erläutert wird.

Die Kalibrierhülse 10 besitzt einen starren, ringförmigen Einlaufkopf 12 und einen starren, ringförmigen Auslaufkopf 13. Der Durchmesser des Auslaufkopfes 13 ist etwas größer als der kleinste Durchmesser des konusförmigen Einlaufkopfes 12, um den Austritt des extrudierten Rohres 6 aus der Kalibrierhülse 10 nicht zu behindern.

Der Einlaufkopf 12 ist an einen Befestigungsflansch 14 angeschraubt, der eine Durchlassöffnung 15 für das extrudierte Rohr 6 hat. Um den Einlaufkopf 12 zu kühlen und gleichzeitig einen Schmierfilm aus Wasser zur Gleitkühlung des extrudierten Rohres 6 auszubilden, besitzt der Einlaufkopf 12 eine Wasserzuführung mit einem Ringkanal 16, der eine umlaufende, zur Rohroberfläche hin offene Nut 17 mit Wasser versorgt.

Der Auslaufkopf 13 ist axial verstellbar. Dazu sind zwei, sich diametral gegenüberliegende Mutter-Spindel-Verstelleinheiten 18, nachstehend abkürzend "Verstelleinheiten" genannt, vorgesehen. Jede Verstelleinheit 18, 19 weist eine Mutter 20 und eine Gewindespindel 21 auf. Durch Verdrehen der Gewindespindel 21 in die eine oder andere Richtung wird die Mutter 20 in ein Gehäuse 22 hineingezogen bzw. aus diesem heraus bewegt.

Der Antrieb der Gewindespindel 21 der Verstelleinheit 18 erfolgt direkt über eine Verbindungswelle 23, die sich zwischen dem Befestigungsflansch 14 und einer ersten Montagescheibe 24 erstreckt. Sie ist an ihrem, dem Befestigungsflansch 14 abgewandten Ende drehfest mit dem Ende der Gewindespindel 21 verbunden. Die Gewindespindel 21 ist an diesem Ende in einem an der ersten Montagescheibe 24 befestigten Lager 39 geführt. Im Abstand zu ersten Montagescheibe 24 ist eine zweite Montagescheibe 25 angeordnet, an die die Gehäuse 22 der Verstelleinheiten 18 und 19 angeflanscht sind. Zwischen der ersten Montagescheibe 24 und der zweiten Montagescheibe 25 sitzt ein Zahnriemenrad 26 drehfest auf der Gewindespindel 21, über das ein nicht dargestellter Zahnriemen über mehrere Umlenkrollen 27, von denen in der Zeichnung nur eine dargestellt ist, zur Verstelleinheit 19 auf der anderen Seite geführt ist. Dort sitzt ein weiteres Zahnriemenrad 28 drehfest auf der Gewindespindel 21, die an ihrem der Mutter 20 abgewandten Ende gleichfalls in einem an die Montagescheibe 24 angeflanschten Lager 29 geführt ist. Auf dieser Seite der Kalibrierhülse 10 erstreckt sich zwischen dem Befestigungsflansch 14 und der ersten Montagescheibe 24 ein Distanzrohr 30.

Der Antrieb der Verstelleinheiten 18 und 19 erfolgt manuell mittels einer nicht dargestellten Kurbel, die auf einen Ansatz 31 aufstechbar ist. Dieser Ansatz 31 durchsetzt den Befestigungsflansch 14 und ist drehbar in einem am Befestigungsflansch 14 verschraubten Lager 32 gelagert. Die Verbindungswelle 23 ist drehfest mit einem aus dem Lager 32 herausragenden Ende des Ansatzes 31 verbunden.

Zwischen dem Einlaufkopf 12 und dem Auslaufkopf 13 sind zwei Bänderlagen 33, 34 angeordnet, die sich nach Art eines Scherengitters kreuzen und an den Kreuzungspunkten gelenkig miteinander verbunden sind. Die beiden Bänderlagen 33, 34 bilden zusammen einen perforierten Hohlzylinder37 , auf dessen Innenseite die Bänderlage 33 und auf dessen Außenseite die Bänderlage 34 angeordnet ist. Die Bänder beider Bänderlagen 33, 34 sind auf der Seite des Einlaufkopfes 12 mit ihren Enden gelenkig an Winkel 35 angeschlagen, die am Umfang der Durchlassöffnung 15 an den Befestigungsflansch 14 angeschraubt sind.

Auf der Seite des Auslaufkopfes 13 ist ein starrer Haltering 36 vorgesehen, der mit dem Auslaufkopf 13 verbunden ist. Der Haltering 36 dient der Befestigung der Enden der Bänder der Bänderlage 33, die gelenkig an die Innenseite des Halteringes 36 angeschlagen sind. Die Enden der Bänder der Bänderlage 34 sind auf der Seite des Auslaufkopfes 13 nicht bis zum Haltering 36 geführt, sondern enden im axialen Abstand von diesem und sind mit ihrem Ende gelenkig an die Bänder der Bänderlage 33 angeschlagen.

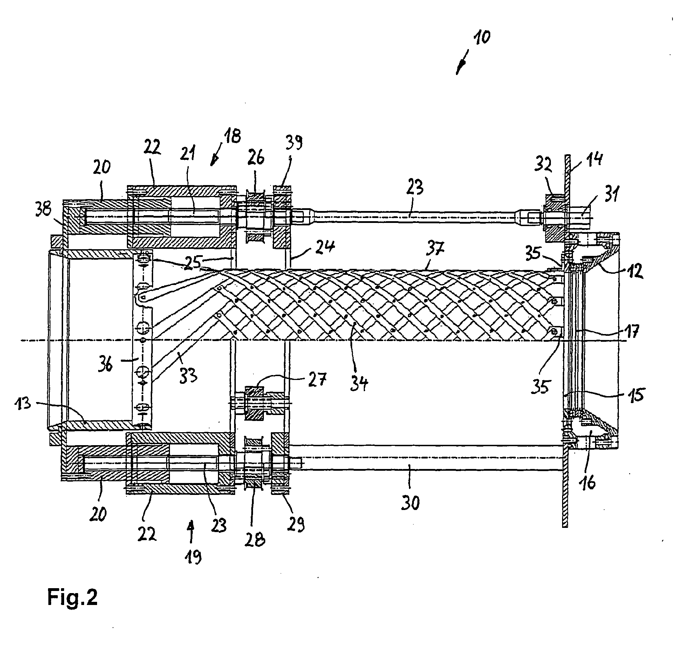

Fig. 2 zeigt eine neutrale Einstellung der Kalibrierhülse 10. In dieser Einstellung hat der aus den beiden Bänderlagen 33, 34 gebildete Hohlzylinder 37, abgesehen von den einen Auslaufkonus bildenden, an den Haltering 36 angeschlagenen Enden der Bänderlage 33, über seine Länge einen gleichbleibenden Durchmesser, der durch die Befestigungspunkte der Bänderlagen 33, 34 an den Haltewinkeln 35 bestimmt ist.

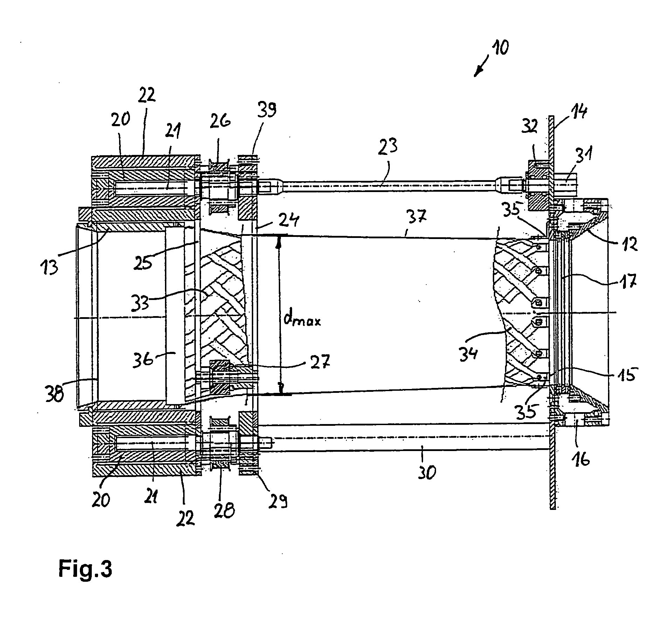

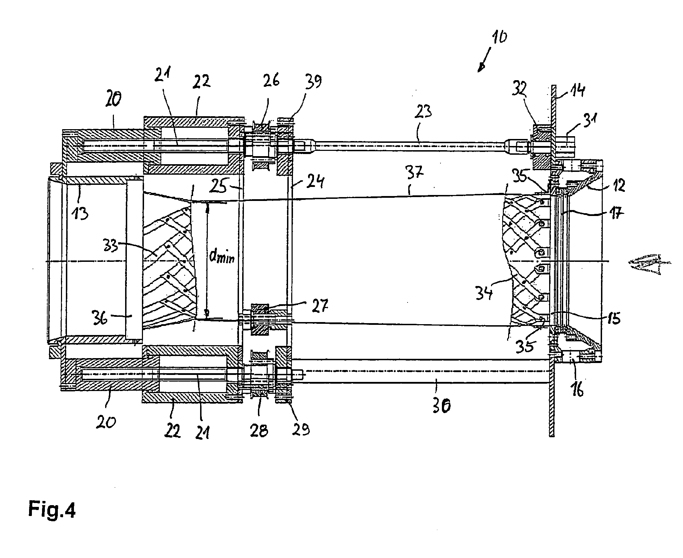

Wenn es erforderlich ist, den Hohlzylinder 37 in Anpassung an das Schrumpfverhalten eines kalibrierten Rohres 6 im Durchmesser zu verändern, werden die Verstelleinheiten 18, 19 entsprechend verstellt. Die Fig. 3 und 4 zeigen die beiden erreichbaren Maximaleinstellungen. Im Falle der Einstellung gemäß Fig. 3 ist die Mutter 20 vollständig in das Gehäuse 22 eingefahren, wodurch der über einen Flansch 38 an den Enden der Muttern 20 befestigte Auslaufkopf 13 maximal zum Einlaufkopf 12 hin axial verlagert ist. Dadurch erfolgt eine Stauchung der Bänderlagen 33, 34 des Hohlzylinders 37, aus der aufgrund des Spiels an den Kreuzungspunkten der beiden Bänderlagen 33, 34 eine leichte konische Aufweitung des Hohlzylinders 37 zum Auslaufkopf 13 hin erfolgt. Daraus resultiert ein Durchmesser dₘₐₓ, der den Außendurchmesser des kalibrierten Rohres 6 bestimmt und größer ist als der Durchmesser des Hohlzylinders 37 auf der Seite des Einlaufkopfes 12.

In der in Fig. 4 gezeigten Situation sind die Muttern 20 maximal aus den Gehäusen 22 herausgefahren, d.h., der Auslaufkopf 13 ist maximal vom Einlaufkopf 12 weg verlagert worden. Dadurch wird Zug auf die Bänderlagen 33, 34 ausgeübt, was zu einer Einschnürung des Hohlzylinders 37 auf der Seite des Auslaufkopfes 13 führt. Der Hohlzylinder 37 hat dadurch, beginnend auf der Seite des Einlaufkopfes 12, eine konvergierende Form mit einem Minimaldurchmesser dₘᵢₙ auf der Seite des Auslaufkopfes 13. Es versteht sich, dass natürlich auch alle Zwischeneinstellungen zwischen den Maximaleinstellungen gemäß den Fig. 3 und 4 einstellbar sind.

## Patentansprüche

1. Kalibrierhülse für extrudierte Kunststoffrohre, mit einer ersten Lage schräg zur Längsachse der Kalibriervorrichtung verlaufender, flexibler Bänder und einer zweiten Lage flexibler Bänder, wobei sich die Bänder der ersten Lage mit den Bändern der zweiten Lage nach Art eines ausziehbaren Scherengitters kreuzen und an den Kreuzungspunkten gelenkig miteinander verbunden sind, und wobei die Bänder der ersten oder zweiten Lage gelenkig an einem starren Haltering am Ende des Kalibrierhülse befestigt sind, der axial verstellbar ist, und wobei die Bänder der anderen Lage in einem axialen Abstand vom Haltering enden und die Bänder der ersten und zweiten Lage am Einlauf der Kalibrierhülse gelenkig fixiert sind, **dadurch gekennzeichnet, dass** der Einlauf als starrer, ringförmiger Einlaufkopf (12) ausgeführt ist.
